# EUROPEAN PATENT SPECIFICATION

(11) **EP 3 473 045 B1**
(45) Date of publication and mention of the grant of the patent: **17.08.2022**
(21) Application number: 16730378.3
(22) Date of filing: 17.06.2016
(51) Int. Cl.: H04W 72/04, H04W 84/04

(54) **ALLOCATING RADIO RESOURCES IN BACKHAUL AND ACCESS LINK**
ZUWEISUNG VON FUNKRESSOURCEN IN BACKHAUL- UND ZUGRIFFSVERBINDUNG
ATTRIBUTION DE RESSOURCES RADIOS DANS UNE LIAISON TERRESTRE ET D'ACCÈS

(43) Date of publication of application: 24.04.2019
(73) Proprietor: Sony Corporation, 108-0075 Tokyo (JP)
(72) Inventor: LARSSON, Bo, 217 64 Malmö (SE); KARLSSON, Peter, 227 38 Lund (SE); NORD, Lars, 223 59 Lund (SE); LÖNNBLAD, Daniel, 247 99 Genarp (SE); LJUNG, Rickard, 256 56 Helsingborg (SE)
(74) Representative: Neusser, Sebastian
(86) International application number: PCT/EP2016/064059
(87) International publication number: WO 2017/215766

(56) References cited:
- WO-A2-2007/069848
- US-A1- 2008 165 719
- US-A1- 2011 228 719
- RALF PABST ET AL: "Fixed relays for next generation wireless systems System concept and performance evaluation", JOURNAL OF COMMUNICATIONS AND NETWORKS, NEW YORK, NY, USA,IEEE, US, vol. 7, no. 2, 1 June 2005 (2005-06-01), pages 104-114, XP011483469, ISSN: 1229-2370, DOI: 10.1109/JCN.2005.6387858

## Description

### FIELD OF THE INVENTION

The present invention relates to a method for allocating radio resources in a wireless communication system, in particular to a method for improving an allocation of radio resources for communication devices attached to the wireless communication system via a direct wireless communication between the communication devices. The present invention relates furthermore to a base station and relaying device implementing the method.

### BACKGROUND OF THE INVENTION

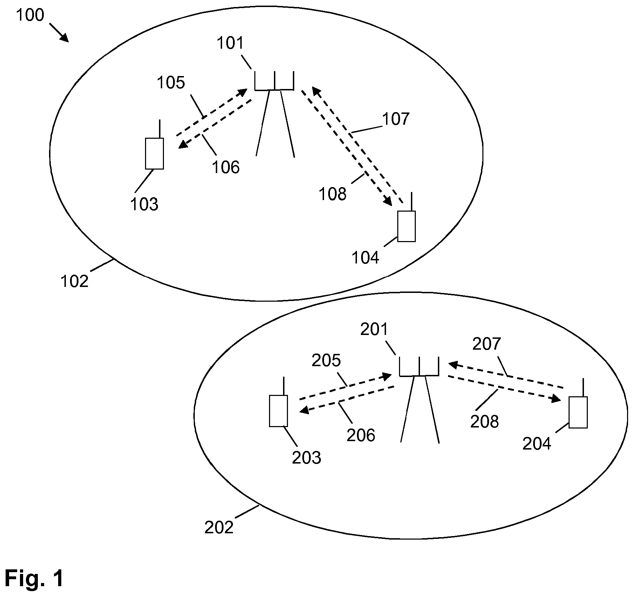

A wireless communication system, for example a cellular-based wireless telecommunication network, which may also be called mobile communication system, may comprise different communications units, so-called network nodes. An exemplary wireless communication system 100 is shown in Figure 1. The network nodes may comprise for example base stations 101, 201 acting as a wireless interface between an operator core network and the wireless access network. Each base station 101, 201 may provide coverage within a corresponding radio cell 102 and 202. Further network nodes may comprise for example terminal devices 103, 104, 203 and 204 acting as end devices providing radio access communication capabilities. The terminal devices 103, 104, 203 and 204 may comprise machine type communication in wearable and loT devices, or other consumer oriented devices, such as mobile phones or smart phones.

A typical radio link architecture in wireless communication systems can be described as a direct link topology. As shown in Figure 1, in such a topology each terminal device is directly connected to one base station via a wireless communication protocol. Typically, a communication from the terminal device to the base station is called uplink, and a communication from the base station to the terminal device is called downlink. For example, terminal device 103 has an uplink connection 105 to the base station 101 and a downlink connection 106 from the base station 101. Likewise, uplink connections 107, 205, 207, and downlink connections 108, 206, 208 are established between the terminal devices 104, 203, 204 and the base stations 101, 201 as shown in Figure 1. In connection with the present description, uplink and downlink connections between the base station and terminal devices within the coverage of the corresponding base station will be called "direct link".

For increasing or improving the coverage or capacity of a wireless communication system, further base stations may be installed providing additional radio cells. However, as an alternative, a relaying topology may be utilized in which a mobile terminal device may be connected to a base station either directly or relayed via one or potentially more other mobile terminal devices. Such a relaying topology may enable to dynamically increase the network coverage in poorly covered areas or to support emergency services required for public safety requirements.

For example, WO 2007/069848 A2 relates to a communication method using a relay station in a mobile communication system. In a method for allocating a radio resource from a base station in a communication system provided with a relay station, a radio resource allocation message including first information and second information is transmitted. The first information relates to radio resource allocation for transmitting data from the base station to the relay station by using an n-th frame, and the second information relating to radio resource allocation for transmitting data from the relay station to a mobile subscriber station by using an (n+k)th frame.

The publication by Ralf Pabst et al: "Fixed relays for next generation wireless systems; System concept and performance evaluation" (JOURNAL OF COMMUNICATIONS AND NETWORKS, NEW YORK, NY, USA, IEEE, US, vol. 7, no. 2, 1 June 2005 (2005-06-01), pages 104-114, XP011483469, ISSN: 1229-2370, DOI: 10.1109/JCN.2005.6387858) relates to fixed relays for next generation wireless systems. In chapter D, a realization of MAC frame based relaying is disclosed. The capacity of the MAC frame is assigned dynamically in a two-stage process. Transmit capacity for terminals directly associated to an access point (AP), for example a fixed relay station (FRS) or a mobile terminal (MT), is allocated by the AP. A FRS appears to the AP like a MT but sets up a sub-frame (SF) structure, which is embedded into a H2 MAC frame structure for serving AP. The SF structure has available only the capacity assigned by the AP to the FRS. This capacity is dynamically allocated by the FRS to its remote mobile terminals (RMT) according to the rules of the H2 MAC protocol.

US 2011/228719 A1 discloses a wireless communication system comprising a core network, a base station and a relay station. The relay station transmits a first message with a system resource information of the relay station to the base station. The base station generates a configuration pattern according to the system resource information and transmits a second message with the configuration pattern to the relay station. The configuration pattern is used to divide the radio resource unit of the wireless communication system into a first set and a second set. The base station transmits a first signal to the relay station through the first set, and the relay station transfers a second signal with a user equipment through the second set.

US 2008/165719 A1 discloses reception at the relay of resource requests by the MSs. An aggregated request is compiled and transmitted to the BS, which then allocates resources. The relay is responsible for splitting the resources to different MSs.

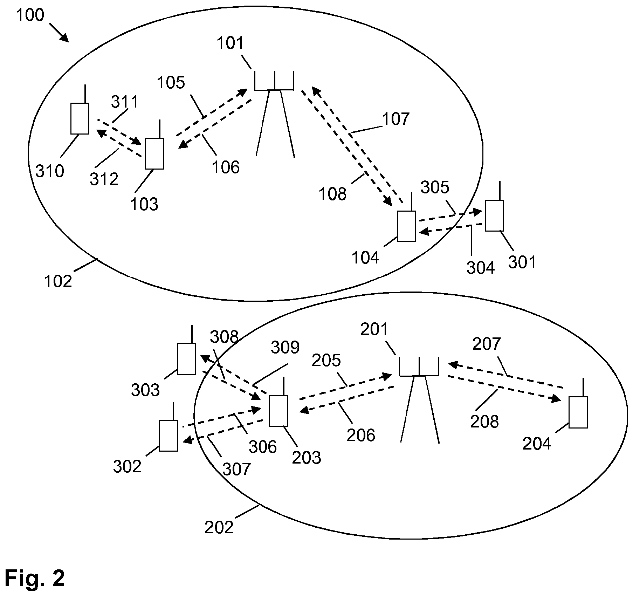

Figure 2 shows the wireless communication system 100 facilitating a relaying topology. Terminal devices 301 to 303, which are located outside the coverage of the cells 102, 202, are coupled to the wireless communication system 100 via relaying the communication via terminal devices which are arranged with in the coverage of the wireless communication system 100. In detail, terminal device 104 may act as a relaying device for relaying information between the terminal device 301 and the base station 101. The communication between the relaying terminal device 104 and the terminal device 301 comprises an uplink connection 304 and a downlink connection 305. The combination of the uplink connection 304 and the downlink connection 305 is also called "sidelink". The relaying device may relay information of two or more other terminal devices. For example, as shown in Figure 2, the relaying terminal device 203 may relay information from two terminal devices 302 and 303. A corresponding sidelink comprising an uplink 308 and a downlink 309 may be established between the relaying terminal device 203 and the terminal device 303. A corresponding sidelink comprising an uplink 306 and a downlink 307 may be established between the relaying terminal device 203 and the terminal device 302.

Relaying topologies may be used also for providing connectivity to devices that are within direct link coverage of a base station, so-called in-coverage relaying. Figure 2 shows a corresponding terminal device 310, which resides in cell 102 of base station 101, but is connected via terminal device 103 acting as a relaying terminal device. A corresponding sidelink comprising an uplink 311 and a downlink 312 may be established between the relaying terminal device 103 and the terminal device 310. The relay functionality may be applied for example to connect a certain type of device that rather should use a sidelink for its communication, or to improve the effective link budget on each link.

In connection with the present description the term "base station" referring for example to items 101, 102, the term "relaying device" referring for example to items 104, 203, and the term "communication device" referring for example to items 301, 302, 303 will be used. The relaying device may comprise a stationary or mobile device capable of relaying information from a communication device. For example, the relaying device may comprise a mobile or stationary terminal device like a mobile telephone or desktop computer with the wireless interface. The communication device may comprise any kind of terminal device, for example a mobile telephone, a notebook computer or a desktop computer. However, these terms shall not be construed for limiting the scope of protection. For example, in view of the terminology used in connection with the standardization in LTE (Long-Term Evolution) of 3GPP (third Generation Partnership Project) a base station may correspond to an eNB (evolved Node B) and the relaying device as well as the communication device may correspond to UE (User Equipment) devices. Furthermore, commonly a communication between the relaying device and the communication device is denoted as device-to-device (D2D) communication.

In many wireless communication systems the base stations are in control of most parts of the communication. The terminal devices connected to the base station are following directives from the base station. These directives may relate to parameter configurations, data traffic scheduling, radio resource control and so on. For the relaying topology there are no direct radio links where the base station is directly involved. Therefore, in particular for parameters that require fast adaption it may be difficult for a base station to control such links. Such fast adapting aspects may comprise in terms of radio resource control for example a selection of radio frequencies and time allocations to be used for the communication between the relaying device and the communication device. For example, a method for LTE D2D communication is specified in Radio Resource Control (RRC) specifications as "sidelink communication configuration" information element (see 3GPP TS 36.331 v 13.1.0 section 6.3.8 "sidelink information elements"). According to the method, the base station provides the relaying device(s) with a general resource allocation block in a static or semi-static manner. This allows the relaying device to determine how to use the allocated resource block. This method may work without significant control signal overhead, but may impact the flexibility of the base station resource control. As an alternative, the base station may provide explicit resource allocation commands for the relayed link(s). However, this may impose a large control signalling overhead on the direct link between the base station and the relaying node.

Therefore, there is a need for a method that allows the base station to have direct control of the relayed links while limiting the amount of control signal overhead.

### SUMMARY OF THE INVENTION

According to the present invention, this objective is achieved by a method for allocating radio resources according to independent claim 1, a relay node according to independent claim 9 and a system according to independent claim 10.

### BRIEF DESCRIPTION OF THE DRAWINGS

The present invention will be described in more detail with reference to the accompanying drawings.
Figure 1 shows schematically a wireless communication system according to an embodiment of the present invention.
Figure 2 shows schematically a wireless communication system including a device-to-device communication according to an embodiment of the present invention.
Figure 3 shows schematically details of a base station and a relaying device, the relaying device according to embodiments of the present invention.
Figure 4 shows schematically a message flow between a base station, a relaying device, and a communication device according to an embodiment of the present invention.
Figure 5 shows a relative allocation of radio resources according to an embodiment of the present invention.

### DETAILED DESCRIPTION OF PREFERRED EMBODIMENTS

In the following, exemplary embodiments of the present invention will be described in more detail. It is to be understood that the features of the various exemplary embodiments described herein may be combined with each other unless specifically noted otherwise. Any coupling between components or devices shown in the Figures may be a direct or indirect coupling unless specifically noted otherwise. Same reference signs in the various drawings refer to similar or identical components.

Figure 1 shows schematically a wireless communication system 100, for example a cellular-based wireless telecommunication network. The wireless communication system 100 may comprise a plurality of base stations 101, 201. The base stations may communicate with each other via wireless radio communications or via an operator core network. The base station 101 serves a radio cell 102 in which terminal devices 103, 104 may communicate directly with the base station 101 via a radio frequency communication indicated by the dashed arrows 105 to 108. In detail, a direct uplink 105 may be provided for communicating data from the terminal device 103 to the base station 101, and a direct downlink 106 may be provided for communicating data from the base station 101 to the terminal device 103. Likewise, a direct uplink 107 may be provided for communicating data from the terminal device 104 to the base station 101, and a direct downlink 108 may be provided for communicating data from the base station 101 to the terminal device 104. The base station 201 serves a radio cell 202 in which terminal devices 203, 204 may communicate directly with the base station 201. A direct uplink 205 and a direct downlink 206 may be provided between the base station 201 and the terminal device 203, and a direct uplink 207 and a direct downlink 208 may be provided between the base station 201 and the terminal device 204. A terminal device outside the radio cells 102, 202 cannot communicate directly with the base stations 101, 201 due to insufficient radio frequency range.

Figure 2 shows schematically how to extend the coverage provided by the base stations 101 and 201. For example, terminal devices 104 and 301 may use a so-called device-to-device (D2D) communication to discover that they are within a radio frequency range of each other. Likewise the terminal devices 302 and 303 may discover via a device-to-device communication that they are within a radio frequency range of the terminal device 203. Communication links may be established between the terminal devices 104, 203 within the cells and the terminal devices 301-303 located outside the cells 102, 202. For example, a so-called sidelink comprising a down-sidelink 305 and an up-sidelink 304 may be established between the terminal device 104 and the terminal device 301. The terminal device 104 may then act as a relaying device for relaying information from the terminal device 301 to the base station 101 and vice versa. In the same way, an up-sidelink 306 and a down-sidelink 307 may be established between the terminal device 203 and the terminal device 302, and an up-sidelink 308 and a down-sidelink 309 may be established between the terminal device 303 and the terminal device 203. The terminal device 203 is therefore acting as a relaying device for the terminal devices 302 and 303. In the following, terminal devices which perform a relaying function like terminal devices 104 and 203 will be called relaying device, and terminal devices located outside the cells 102, 202 and connected via a device-to-device communication will be called communication device.

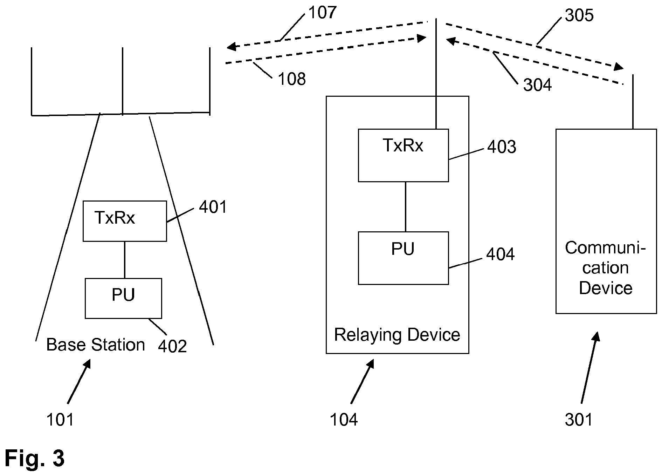

Figure 3 shows the base station 101, the relaying device 104 and the communication device 301 in more detail. The base station 101 comprises a transceiver (TxRx) 401 and a processing unit (PU) 402. The relaying device 104 comprises a transceiver (TxRx) 403 and a processing unit (PU) 404. The communication device 301 may comprise also a transceiver and a processing unit, but these details are not shown in Figure 3 for clarity reasons. The direct uplink 107 and the direct downlink 108 as well as the up-sidelink 304 and the down-sidelink 305 are also shown in Figure 3.

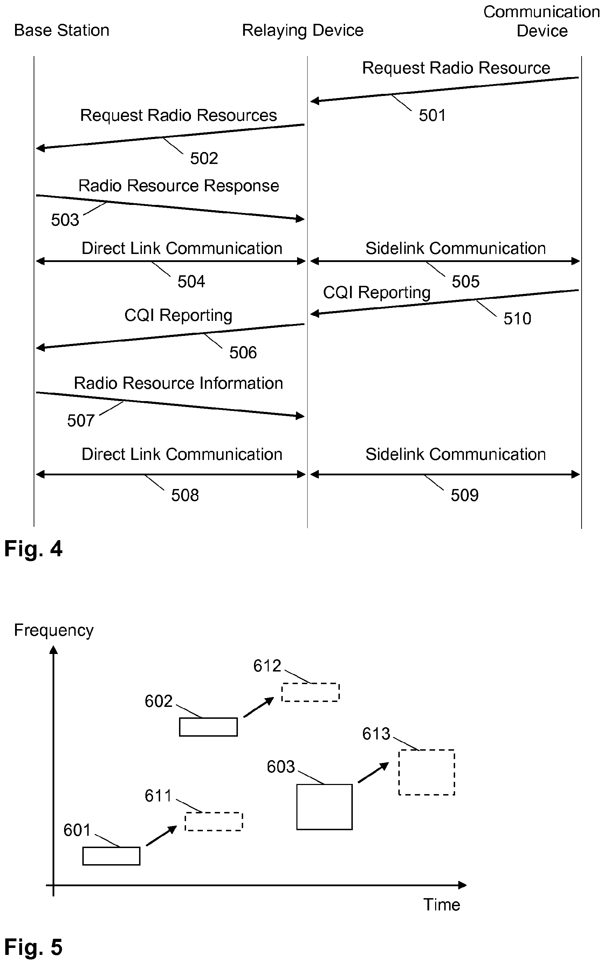

Typically, in wireless communication systems like the wireless communication system 100, the base stations 101, 201 are in control of most parts of the communication. In particular the base stations 101, 201 may control the use of radio resources used for wireless communication. For establishing sidelinks 304-309 and 311, 312, pre-allocated resource blocks may be provided. However, this may reduce capacity. Therefore, radio resources may be allocated as will be described in more detail in the following in connection with Figures 4 and 5.

In the following, reference will be made mainly to the communication between the base station 101, the relaying device 104 and the communication device 301. However, although not explicitly noted, the same mechanisms and techniques may be used for the communication between the base station 201, the relaying device 203 and the communication devices 302 and 303.

As shown in Figure 4, communication device 301 may send a radio resource request 501 to the relaying device 104 after having detected that the communication device 301 and the relaying device 104 are with in a radio frequency range for a device-to-device communication. The relaying device 104 receives the radio resource request 501 from the communication device 301. In case a plurality of communication devices are with in a radio frequency range for a device-to-device communication, the relaying device 104 may receive a plurality of corresponding radio resource requests from each of the communication devices. For example the relaying device 203 of Figure 2 may receive a radio resource request from the communication device 302 and a further radio resource request from the communication device 303.

In case of multiple radio resource requests 501 from a plurality of communication devices, the relaying device 104 may coordinate the multiple resource needs into a combined resource need for the multiple sidelinks. Additionally, the relaying device 104 may modify the radio resource requests from the communication devices connected via the sidelinks. The modification may be based for example on a prioritization by the relaying device among the different sidelinks, taking into account the total amount of resources to be allocated. For its own communication with the base station 101, the relaying device 104 may also want to request radio resources from the base station 101. Therefore, the relaying device 104 may transmit a message 502 to the base station including a request for radio resources for the communication devices coupled via a device-to-device communication as well as a request for radio resources for the communication between the relaying device 104 and the base station 101.

Note that the scheduling request in the uplink direction may be triggered based on a relay request from the communication device 301 requesting a specific relaying device 104 to start relaying uplink data. The relay request may use discovery resources that are autonomously allocated. The relay request or a following packet from the communication device may include an uplink buffer size used later in the scheduling request generated by the relaying device 104.

In response to the message 502 the base station 101 may transmit a radio resource response 503 to the relaying device 104. The radio resource response 503 includes radio resources for the direct link communication between the base station 101 and the relaying device 104 as well as radio resources for the sidelink communication between the relaying device 104 and the communication device 301. The radio resource response 503 may include the radio resources for the direct link and the sidelink in uplink direction. The relaying device 104 may extract from the message 503 the allocated radio resources for the sidelink in uplink direction and communicate this to the communication device 301. Additionally or as an alternative, the radio resource response 503 may include the radio resources for the direct link and the sidelink in the downlink direction. The radio resource requests and the responded resource allocation for the relayed sidelinks may be indicated relatively to the radio resource request and the responded resource allocation of the direct link. The relation may be in terms of needed resources for the request, for example asking for the same amount or twice the amount or other levels of transmission capacity as in the direct link request. In this manner, the resource allocation for the sidelink will be communicated with very little additional control signalling overhead. Furthermore, this relation between direct link and sidelink allocation could be in terms of time and/or frequency on schedule grants, for example specifying that the sidelink resources are allocated later in time, and/or higher or lower in frequency. This relative indication can be sent per request and/or response, or may be static or semi-static. A semi-static indication allows that the parameters for the sidelink may be optional and are considered to be the same values as long as no new indication is signalled. Figure 5 shows schematically resources 601 to 603 allocated for the direct link and relatively allocated resources 611 to 613 for a sidelink. In the example shown in Figure 5 it is assumed that the sidelink allocation is scheduled in relation to a direct link allocation with a relative indication "same amount of resources, one frequency step higher and two time slots later". Note that this example is only illustrative and in a real implementation the frequency steps and timeslots may be clearly defined, for example using a frequency in megahertz, a number of sub carriers, defined frequency bands and so on for frequency steps, and a value of milliseconds or a transmission time interval, frames and so on for the time granularity.

If the relaying device 104 has combined several sidelink resource needs into one resource request 502, the relaying device 104 may distribute the allocated combined sidelink resources received via the radio resource response 503 into different sidelink transmissions according to individual sidelink resource needs (not shown in Fig. 4).

Using the allocated radio resources of the response 503, a direct link communication 504 may be established between the base station 101 and the relaying device 104 as well as a sidelink communication 505 may be established between the relaying device 104 and the communication device 301.

Optionally, the relaying device 104 may transmit a channel quality indication (CQI) reporting 506 in the uplink to the base station 101. The CQI may indicate the channel quality as estimated for the downlink channel of the direct link between the base station 101 and the relaying device 104. Additionally, the CQI reporting 506 may also include additional sidelink CQI information determined based on a communication over the sidelink between the relaying device 104 and the communication device 301. The base station 101 may use this information in its future resource allocation decisions, for example to avoid channel allocation that results in low CQI reports for the sidelink. The sidelink information may include up-sidelink and/or down-sidelink related information. The down-sidelink related quality information may be reported from the communication device 301 to the relaying device 104 via a corresponding CQI reporting 510. Future resource allocation decisions from the base station 101 may be transmitted via a radio resource information message 507 which may contain essentially the same information as the radio resource response 503.

Based on the allocated radio resources of the radio resource information 507, a direct link communication 508 may be established between the base station 101 and the relaying device 104, and a sidelink communication 509 may be established between the relaying device 104 and the communication device 301.

The above-described method allows the base station 101 to allocate sidelink transmission resources for both, when scheduling uplink grants and when scheduling downlink transmissions. Note that the base station 101 may utilize only one of these opportunities.

## Claims

1. A method for allocating radio resources in a wireless communication system, wherein a relaying device (104, 203) of the wireless communication system (100) is configured to relay information between a base station (101, 201) of the wireless communication system (100) and a plurality of communication devices (301-303) of the wireless communication system (100) located within a wireless communication range of the relaying device (104, 203), the method comprising:
- transmitting from each of the plurality of communication devices (301-303) a corresponding radio resource request (501) to the relaying device (104, 203) requesting a radio resource for a communication (304-309) between the relaying device (104, 203) and the corresponding communication device,
- modifying the radio resource requests (501) from the communication devices (301-303) at the relaying device (104, 203) for coordinating the radio resource requests (501) before transmitting a radio resource request (502) to the base station (101, 201),
- transmitting the radio resource request (502) from the relaying device (104, 203) to the base station (101, 201), the radio resource request (502) comprising a request for a radio resource for a communication (107, 108, 205, 206) between the base station (101, 201) and the relaying device (104, 203), and corresponding requests for each communication (304-309) between the relaying device (104, 203) and a corresponding communication device of the plurality of communication devices (301-303),
- determining, at the base station (101, 201), a first radio resource for the communication (107, 108, 205, 206) between the base station (101, 201) and the relaying device (104, 203),
- determining, at the base station (101, 201), for each communication device of the plurality of communication devices (301-303) a corresponding second radio resource for the communication between the relaying device (104, 203) and the corresponding communication device of the plurality of communication devices (301-303), and
- transmitting a message (503) from the base station (101, 201) to the relaying device (104, 203), the message (503) comprising information indicating the first radio resource and information indicating the second radio resources.

2. The method according to claim 1, wherein the communication (107, 108, 205, 206) between the base station (101, 201) and the relaying device (104, 203) comprises at least one of:
- a downlink communication (108, 206) from the base station (101, 201) to the relaying device (104, 203), wherein the first radio resource comprises a first downlink radio resource for the downlink communication (108, 206) from the base station (101, 201) to the relaying device (104, 203), and the second radio resources comprise for each communication device of the plurality of communication devices (301-303) a corresponding second downlink radio resource for a downlink communication (305, 307, 309) from the relaying device (104, 203) to the corresponding communication device of the plurality of communication devices (301-303), and
- an uplink communication (107, 205) from the relaying device (104, 203) to the base station (101, 201), wherein the first radio resource comprises a first uplink radio resource for the uplink communication (107, 205) from the relaying device (104, 203) to the base station (101, 201), and the second radio resources comprise for each communication device of the plurality of communication devices (301-303) a corresponding second uplink radio resource for an uplink communication (304, 306, 308) from the corresponding communication device of the plurality of communication devices (301-303) to the relaying device (104, 203).

3. The method according to claim 1 or claim 2, wherein transmitting the radio resource request (502) from the relaying device (104, 203) to the base station (101, 201) comprises:
- detecting, by the relaying device (104, 203), the plurality of communication devices (301-303), and
- transmitting the radio resource request (502) upon detecting the plurality of communication devices (301-303).

4. The method according to any one of the preceding claims, wherein the information indicating the second radio resources comprises a relative information indicating the second radio resources (611-613) relatively with respect to the first radio resource (601-603).

5. The method according to any one of the preceding claims, the method further comprising:
- transmitting (505) data from the plurality of communication devices (301-303) to the relaying device (104, 203) using the second radio resources, and
- transmitting (504) the data from the relaying device (104, 203) to the base station (101, 201) using the first radio resource.

6. The method according to claim 5, further comprising:
- determining, at the relaying device (104, 203), a first channel quality information relating to the communication (107, 108, 205, 206) between the base station (101, 201) and the relaying device (104, 203),
- determining, at the relaying device (104, 203), a second channel quality information relating to the communication (304-309) between the relaying device (104, 203) and the plurality of communication devices (301-303), and
- transmitting the first and second channel quality information from the relaying device (104, 203) to the base station (101, 201).

7. The method according to claim 6, wherein determining the first radio resource comprises:
- determining the first radio resource depending on the first channel quality information.

8. The method according to claim 6 or claim 7, wherein determining the second radio resources comprises:
- determining the second radio resources depending on the second channel quality information.

9. A relaying device for a wireless communication system, the relaying device (104, 203) comprising:
- a transceiver (403), and
- a processing unit (404) configured to
relay information between a base station (101, 201) of the wireless communication system (100) and a plurality of communication devices (301-303) of the wireless communication system (100) located within a wireless communication range of the relaying device (104, 203),
receive from each of the plurality of communication devices (301-303) a corresponding radio resource request (501) requesting a radio resource for a communication (304-309) between the relaying device (104, 203) and the corresponding communication device,
modify the radio resource requests (501) from the communication devices (301-303) for coordinating the radio resource requests (501) before transmitting a radio resource request (502) to the base station (101, 201),
transmit the radio resource request (502) to the base station (101, 201), the radio resource request (502) comprising a request for a radio resource for the communication (107, 108, 205, 206) between the base station (101, 201) and the relaying device (104, 203), and corresponding requests for each communication (304-309) between the relaying device (104, 203) and a corresponding communication device (301-303) of the plurality of communication devices (301-303), receive a message (503) from the base station (101, 201), the message (503) comprising information indicating a first radio resource and information indicating second radio resources, the first radio resource being determined by the base station (101, 201) for a communication (107, 108, 205, 206) between the base station (101, 201) and the relaying device (104, 203), and each of the second radio resources being determined by the base station (101, 201) for the corresponding communication (304-309) between the relaying device (104, 203) and the corresponding communication device of the plurality of communication devices (301-303).

10. A wireless communication system comprising a relaying device according to claim 9 and a base station, the base station (101, 201) comprising:
- a transceiver (401), and
- a processing unit (402) configured to
receive the radio resource request (502) from the relaying device (104, 203) of the wireless communication system (100),
determine the first radio resource for the communication (107, 108, 205, 206) between the base station (101, 201) and the relaying device (104, 203),
determine for each communication device of the plurality of communication devices (301-303) the corresponding second radio resource for the communication (304-309) between the relaying device (104, 203) and the corresponding communication device of the plurality of communication devices (301-303), and
transmit the message (503) to the relaying device (104, 203), the message (503) comprising information indicating the first radio resource and information indicating the second radio resources.

## Patentansprüche

1. Verfahren zum Zuordnen von Funkbetriebsmitteln in einem drahtlosen Kommunikationssystem, wobei eine Weiterleitungsvorrichtung (104, 203) des drahtlosen Kommunikationssystems (100) konfiguriert ist, Informationen zwischen einer Basisstation (101, 201) des drahtlosen Kommunikationssystems (100) und mehreren Kommunikationsvorrichtungen (301-303) des drahtlosen Kommunikationssystems (100), die sich innerhalb eines Bereichs der drahtlosen Kommunikation der Weiterleitungsvorrichtung (104, 203) befinden, weiterzuleiten, wobei das Verfahren Folgendes umfasst:
- Senden einer entsprechenden Funkbetriebsmittelanforderung (501), die ein Funkbetriebsmittel für eine Kommunikation (304-309) zwischen der Weiterleitungsvorrichtung (104, 203) und der entsprechenden Kommunikationsvorrichtung anfordert, von jeder der mehreren Kommunikationsvorrichtungen (301-303) an die Weiterleitungsvorrichtung (104, 203),
- Ändern der Funkbetriebsmittelanforderungen (501) von den Kommunikationsvorrichtungen (301-303) bei der Weiterleitungsvorrichtung (104, 203), um die Funkbetriebsmittelanforderungen (501) zu koordinieren, bevor eine Funkbetriebsmittelanforderung (502) an die Basisstation (101, 201) gesendet wird,
- Senden der Funkbetriebsmittelanforderung (502) von der Weiterleitungsvorrichtung (104, 203) an die Basisstation (101, 201), wobei die Funkbetriebsmittelanforderung (502) eine Anforderung für ein Funkbetriebsmittel für eine Kommunikation (107, 108, 205, 206) zwischen der Basisstation (101, 201) und der Weiterleitungsvorrichtung (104, 203) und entsprechende Anforderungen für jede Kommunikation (304-309) zwischen der Weiterleitungsvorrichtung (104, 203) und einer entsprechenden Kommunikationsvorrichtung der mehreren Kommunikationsvorrichtungen (301-303) umfasst,
- Bestimmen eines ersten Funkbetriebsmittels für die Kommunikation (107, 108, 205, 206) zwischen der Basisstation (101, 201) und der Weiterleitungsvorrichtung (104, 203) bei der Basisstation (101, 201),
- Bestimmen eines entsprechenden zweiten Funkbetriebsmittels für die Kommunikation zwischen der Weiterleitungsvorrichtung (104, 203) und der entsprechenden Kommunikationsvorrichtung der mehreren Kommunikationsvorrichtungen (301-303) für jede Kommunikationsvorrichtung der mehreren Kommunikationsvorrichtungen (301-303) bei der Basisstation (101, 201), und
- Senden einer Nachricht (503) von der Basisstation (101, 201) an die Weiterleitungsvorrichtung (104, 203), wobei die Nachricht (503) Informationen, die das erste Funkbetriebsmittel angeben, und Informationen, die die zweiten Funkbetriebsmittel angeben, umfasst.

2. Verfahren nach Anspruch 1, wobei die Kommunikation (107, 108, 205, 206) zwischen der Basisstation (101, 201) und der Weiterleitungsvorrichtung (104, 203) wenigstens eine der Folgenden umfasst:
- eine Abwärtsstreckenkommunikation (108, 206) von der Basisstation (101, 201) zu der Weiterleitungsvorrichtung (104, 203), wobei das erste Funkbetriebsmittel ein erstes Abwärtsstreckenfunkbetriebsmittel für die Abwärtsstreckenkommunikation (108, 206) von der Basisstation (101, 201) zu der Weiterleitungsvorrichtung (104, 203) umfasst und wobei die zweiten Funkbetriebsmittel für jede Kommunikationsvorrichtung der mehreren Kommunikationsvorrichtungen (301-303) ein entsprechendes zweites Abwärtsstreckenfunkbetriebsmittel für eine Abwärtsstreckenkommunikation (305, 307, 309) von der Weiterleitungsvorrichtung (104, 203) zu der entsprechenden Kommunikationsvorrichtung der mehreren Kommunikationsvorrichtungen (301-303) umfassen, und
- eine Aufwärtsstreckenkommunikation (107, 205) von der Weiterleitungsvorrichtung (104, 203) zu der Basisstation (101, 201), wobei das erste Funkbetriebsmittel ein erstes Aufwärtsstreckenfunkbetriebsmittel für die Aufwärtsstreckenkommunikation (107, 205) von der Weiterleitungsvorrichtung (104, 203) zu der Basisstation (101, 201) umfasst und wobei die zweiten Funkbetriebsmittel für jede Kommunikationsvorrichtung der mehreren Kommunikationsvorrichtungen (301-303) ein entsprechendes zweites Aufwärtsstreckenfunkbetriebsmittel für eine Aufwärtsstreckenkommunikation (304, 306, 308) von der entsprechenden Kommunikationsvorrichtung der mehreren Kommunikationsvorrichtungen (301-303) zu der Weiterleitungsvorrichtung (104, 203) umfassen.

3. Verfahren nach Anspruch 1 oder Anspruch 2, wobei das Senden der Funkbetriebsmittelanforderung (502) von der Weiterleitungsvorrichtung (104, 203) an die Basisstation (101, 201) Folgendes umfasst:
- Detektieren der mehreren Kommunikationsvorrichtungen (301-303) durch die Weiterleitungsvorrichtung (104, 203), und
- Senden der Funkbetriebsmittelanforderung (502) nach Detektieren der mehreren Kommunikationsvorrichtungen (301-303).

4. Verfahren nach einem der vorhergehenden Ansprüche, wobei die Informationen, die die zweiten Funkbetriebsmittel angeben, relative Informationen umfassen, die die zweiten Funkbetriebsmittel (611-613) relativ in Bezug auf das erste Funkbetriebsmittel (601-603) angeben.

5. Verfahren nach einem der vorhergehenden Ansprüche, wobei das Verfahren ferner Folgendes umfasst:
- Senden (505) von Daten von den mehreren Kommunikationsvorrichtungen (301-303) an die Weiterleitungsvorrichtung (104, 203) unter Verwendung der zweiten Funkbetriebsmittel, und
- Senden (504) der Daten von der Weiterleitungsvorrichtung (104, 203) an die Basisstation (101, 201) unter Verwendung des ersten Funkbetriebsmittels.

6. Verfahren nach Anspruch 5, das ferner Folgendes umfasst:
- Bestimmen erster Kanalqualitätsinformationen in Bezug auf die Kommunikation (107, 108, 205, 206) zwischen der Basisstation (101, 201) und der Weiterleitungsvorrichtung (104, 203) bei der Weiterleitungsvorrichtung (104, 203),
- Bestimmen zweiter Kanalqualitätsinformationen in Bezug auf die Kommunikation (304-309) zwischen der Weiterleitungsvorrichtung (104, 203) und den mehreren Kommunikationsvorrichtungen (301-303) bei der Weiterleitungsvorrichtung (104, 203), und
- Senden der ersten oder zweiten Kanalqualitätsinformationen von der Weiterleitungsvorrichtung (104, 203) an die Basisstation (101, 201).

7. Verfahren nach Anspruch 6, wobei das Bestimmen des ersten Funkbetriebsmittels Folgendes umfasst:
- Bestimmen des ersten Funkbetriebsmittels in Abhängigkeit von den ersten Kanalqualitätsinformationen.

8. Verfahren nach Anspruch 6 oder Anspruch 7, wobei das Bestimmen der zweiten Funkbetriebsmittel Folgendes umfasst:
- Bestimmen der zweiten Funkbetriebsmittel in Abhängigkeit von den zweiten Kanalqualitätsinformationen.

9. Weiterleitungsvorrichtung für ein drahtloses Kommunikationssystem, wobei die Weiterleitungsvorrichtung (104, 203) Folgendes umfasst:
- einen Senderempfänger (403) und
- eine Verarbeitungseinheit (404), die konfiguriert ist zum
Weiterleiten von Informationen zwischen einer Basisstation (101, 201) des drahtlosen Kommunikationssystems (100) und mehreren Kommunikationsvorrichtungen (301, 303) des drahtlosen Kommunikationssystems (100), die sich innerhalb eines Bereichs der drahtlosen Kommunikation der Weiterleitungsvorrichtung (104, 203) befinden,
Empfangen einer entsprechenden Funkbetriebsmittelanforderung (501), die ein Funkbetriebsmittel für eine Kommunikation (304-309) zwischen der Weiterleitungsvorrichtung (104, 203) und der entsprechenden Kommunikationsvorrichtung anfordert, von jeder der mehreren Kommunikationsvorrichtungen (301-303),
Ändern der Funkbetriebsmittelanforderungen (501) von den Kommunikationsvorrichtungen (301-303) zum Koordinieren der Funkbetriebsmittelanforderungen (501) vor dem Senden einer Funkbetriebsmittelanforderung (502) an die Basisstation (101, 201),
Senden der Funkbetriebsmittelanforderung (502) an die Basisstation (101, 201), wobei die Funkbetriebsmittelanforderung (502) eine Anforderung für ein Funkbetriebsmittel für die Kommunikation (107, 108, 205, 206) zwischen der Basisstation (101, 201) und der Weiterleitungsvorrichtung (104, 203) und entsprechende Anforderungen für jede Kommunikation (304-309) zwischen der Weiterleitungsvorrichtung (104, 203) und einer entsprechenden Kommunikationsvorrichtung (301-303) der mehreren Kommunikationsvorrichtungen (301-303) umfasst,
Empfangen einer Nachricht (503) von der Basisstation (101, 201), wobei die Nachricht (503) Informationen, die ein erstes Funkbetriebsmittel angeben, und Informationen, die zweite Funkbetriebsmittel angeben, umfasst, wobei das erste Funkbetriebsmittel durch die Basisstation (101, 201) für eine Kommunikation (107, 108, 205, 206) zwischen der Basisstation (101, 201) und der Weiterleitungsvorrichtung (104, 203) bestimmt ist und wobei jedes der zweiten Funkbetriebsmittel durch die Basisstation (101, 201) für die entsprechende Kommunikation (304-309) zwischen der Weiterleitungsvorrichtung (104, 203) und der entsprechenden Kommunikationsvorrichtung der mehreren Kommunikationsvorrichtungen (301-303) bestimmt ist.

10. Drahtloses Kommunikationssystem, das eine Weiterleitungsvorrichtung nach Anspruch 9 und eine Basisstation umfasst, wobei die Basisstation (101, 201) Folgendes umfasst:
- einen Senderempfänger (401) und
- eine Verarbeitungseinheit (402), die konfiguriert ist zum
Empfangen der Funkbetriebsmittelanforderung (502) von der Weiterleitungsvorrichtung (104, 203) des drahtlosen Kommunikationssystems (100),
Bestimmen des ersten Funkbetriebsmittels für die Kommunikation (107, 108, 205, 206) zwischen der Basisstation (101, 201) und der Weiterleitungsvorrichtung (104, 203),
Bestimmen des entsprechenden zweiten Funkbetriebsmittels für die Kommunikation (304-309) zwischen der Weiterleitungsvorrichtung (104, 203) und der entsprechenden Kommunikationsvorrichtung der mehreren Kommunikationsvorrichtungen (301-303) für jede Kommunikationsvorrichtung der mehreren Kommunikationsvorrichtungen (301-303), und
Senden der Nachricht (503) an die Weiterleitungsvorrichtung (104, 203), wobei die Nachricht (503) Informationen, die das erste Funkbetriebsmittel angeben, und Informationen, die die zweiten Funkbetriebsmittel angeben, umfasst.

## Revendications

1. Procédé d'attribution de ressources radio dans un système de communication sans fil, dans lequel un dispositif relais (104, 203) du système de communication sans fil (100) est configuré pour relayer des informations entre une station de base (101, 201) du système de communication sans fil (100) et une pluralité de dispositifs de communication (301) 303) du système de communication sans fil (100) situés dans une plage de communication sans fil du dispositif relais (104, 203), le procédé comprenant :
- la transmission à partir de chacun de la pluralité de dispositifs de communication (301-303) d'une demande de ressource radio correspondante (501) au dispositif relais (104, 203) demandant une ressource radio pour une communication (304-309) entre le dispositif relais (104, 203) et le dispositif de communication correspondant,
- la modification des demandes de ressources radio (501) des dispositifs de communication (301-303) au niveau du dispositif relais (104, 203) pour coordonner les demandes de ressources radio (501) avant la transmission d'une demande de ressources radio (502) à la station de base (101, 201),
- la transmission de la demande de ressources radio (502) à partir du dispositif relais (104, 203) à la station de base (101, 201), la demande de ressources radio (502) comprenant une demande de ressource radio pour une communication (107, 108, 205, 206) entre la station de base (101, 201) et le dispositif relais (104, 203), et des demandes correspondantes pour chaque communication (304-309) entre le dispositif relais (104, 203) et un dispositif de communication correspondant de la pluralité de dispositifs de communication (301-303),
- la détermination, au niveau de la station de base (101, 201), d'une première ressource radio pour la communication (107, 108, 205, 206) entre la station de base (101, 201) et le dispositif relais (104, 203),
- la détermination, au niveau de la station de base (101, 201), pour chaque dispositif de communication de la pluralité de dispositifs de communication (301-303) d'une seconde ressource radio correspondante pour la communication entre le dispositif relais (104, 203) et le dispositif de communication correspondant de la pluralité de dispositifs de communication (301, 303), et
- la transmission d'un message (503) à partir de la station de base (101, 201) au dispositif relais (104, 203), le message (503) comprenant des informations indiquant la première ressource radio et des informations indiquant les secondes ressources radio.

2. Procédé selon la revendication 1, dans lequel la communication (107, 108, 205, 206) entre la station de base (101, 201) et le dispositif relais (104, 203) comprend au moins :
- une communication de liaison descendante (108, 206) de la station de base (101, 201) au dispositif relais (104, 203), dans lequel la première ressource radio comprend une première ressource radio de liaison descendante pour la communication de liaison descendante (108, 206) de la station de base (101, 201) au dispositif relais (104, 203), et les secondes ressources radio comprennent pour chaque dispositif de communication de la pluralité de dispositifs de communication (301 à 303) une seconde ressource radio de liaison descendante correspondante pour une communication de liaison descendante (305, 307, 309) du dispositif relais (104, 203) au dispositif de communication correspondant de la pluralité de dispositifs de communication (301-303), et
- une communication de liaison montante (107, 205) entre le dispositif relais (104, 203) et la station de base (101, 201), dans lequel la première ressource radio comprend une première ressource radio de liaison montante pour la communication de liaison montante (107, 205) du dispositif relais (104, 203) à la station de base (101, 201), et les secondes ressources radio comprennent pour chaque dispositif de communication de la pluralité de dispositifs de communication (301-303) une seconde ressource radio de liaison montante correspondante pour une communication de liaison montante (304, 306, 308) du dispositif de communication correspondant de la pluralité de dispositifs de communication (301-303) au dispositif relais (104, 203).

3. Procédé selon la revendication 1 ou la revendication 2, dans lequel la transmission de la demande de ressource radio (502) à partir du dispositif relais (104, 203) à la station de base (101,201) comprend :
- la détection, par le dispositif relais (104, 203), de la pluralité de dispositifs de communication (301-303), et
- la transmission de la demande de ressources radio (502) lors de la détection de la pluralité de dispositifs de communication (301-303).

4. Procédé selon l'une quelconque des revendications précédentes, dans lequel les informations indiquant les secondes ressources radio comprennent des informations relatives indiquant les secondes ressources radio (611-613) relativement à la première ressource radio (601-603) .

5. Procédé selon l'une quelconque des revendications précédentes, le procédé comprenant en outre :
- la transmission (505) de données à partir de la pluralité de dispositifs de communication (301-303) au dispositif relais (104, 203) à l'aide des secondes ressources radio, et
- la transmission (504) des données à partir du dispositif relais (104, 203) à la station de base (101, 201) à l'aide de la première ressource radio.

6. Procédé selon la revendication 5, comprenant en outre :
- la détermination, au niveau du dispositif relais (104, 203), de premières informations de qualité de canal relatives à la communication (107, 108, 205, 206) entre la station de base (101, 201) et le dispositif relais (104, 203),
- la détermination, au niveau du dispositif relais (104, 203), de secondes informations de qualité de canal relatives à la communication (304-309) entre le dispositif relais (104, 203) et la pluralité de dispositifs de communication (301-303), et
- la transmission des premières et secondes informations de qualité de canal du dispositif relais (104, 203) à la station de base (101, 201).

7. Procédé selon la revendication 6, dans lequel la détermination de la première ressource radio comprend :
- la détermination de la première ressource radio en fonction des premières informations de qualité de canal.

8. Procédé selon la revendication 6 ou la revendication 7, dans lequel la détermination des secondes ressources radio comprend :
- la détermination des secondes ressources radio en fonction des secondes informations de qualité de canal.

9. Dispositif relais pour système de communication sans fil, le dispositif relais (104, 203) comprenant :
- un émetteur-récepteur (403), et
- une unité de traitement (404) configurée pour relayer des informations entre une station de base (101, 201) du système de communication sans fil (100) et une pluralité de dispositifs de communication (301-303) du système de communication sans fil (100) situés dans une plage de communication sans fil du dispositif relais (104, 203),
recevoir à partir de chacun de la pluralité de dispositifs de communication (301-303) une demande de ressource radio correspondante (501) demandant une ressource radio pour une communication (304-309) entre le dispositif relais (104, 203) et le dispositif de communication correspondant,
modifier les demandes de ressources radio (501) des dispositifs de communication (301-303) pour coordonner les demandes de ressources radio (501) avant de transmettre une demande de ressource radio (502) à la station de base (101, 201),
transmettre la demande de ressources radio (502) à la station de base (101, 201), la demande de ressources radio (502) comprenant une demande de ressource radio pour la communication (107, 108, 205, 206) entre la station de base (101, 201) et le dispositif relais (104, 203), et des demandes correspondantes pour chaque communication (304-309) entre le dispositif relais (104, 203) et un dispositif de communication correspondant (301-303) de la pluralité de dispositifs de communication (301-303),
recevoir un message (503) à partir de la station de base (101, 201), le message (503) comprenant des informations indiquant une première ressource radio et des informations indiquant une seconde ressource radio, la première ressource radio étant déterminée par la station de base (101, 201) pour une communication (107, 108, 205, 206) entre la station de base (101, 201) et le dispositif relais (104, 203), et chacune des secondes ressources radio étant déterminée par la station de base (101, 201) pour la communication correspondante (304-309) entre le dispositif relais (104, 203) et le dispositif de communication correspondant de la pluralité de dispositifs de communication (301, 303).

10. Système de communication sans fil comprenant un dispositif relais selon la revendication 9 et une station de base, la station de base (101, 201) comprenant :
- un émetteur-récepteur (401), et
- une unité de traitement (402) configurée pour
recevoir la demande de ressources radio (502) à partir du dispositif relais (104, 203) du système de communication sans fil (100),
déterminer la première ressource radio pour la communication (107, 108, 205, 206) entre la station de base (101, 201) et le dispositif relais (104, 203),
déterminer pour chaque dispositif de communication de la pluralité de dispositifs de communication (301-303) la seconde ressource radio correspondante pour la communication (304-309) entre le dispositif relais (104, 203) et le dispositif de communication correspondant de la pluralité de dispositifs de communication (301-303), et
transmettre le message (503) au dispositif relais (104, 203), le message (503) comprenant des informations indiquant la première ressource radio et des informations indiquant les secondes ressources radio.
